# EUROPEAN PATENT SPECIFICATION

(11) **EP 3 165 402 B1**
(45) Date of publication and mention of the grant of the patent: **23.05.2018**
(21) Application number: 16475501.9
(22) Date of filing: 31.10.2016
(51) Int. Cl.: B60P 3/34

(54) **FOLDABLE SUPERSTRUCTURE FOR VEHICLES**
FALTBARER ÜBERBAU FÜR FAHRZEUGE
SUPERSTRUCTURE REPLIABLE POUR VÉHICULES

(30) Priority: 04.11.2015 SK 501052015 U
(43) Date of publication of application: 10.05.2017
(73) Proprietor: A1Attack s. r. o., 903 01 Senec (SK)
(72) Inventor: KVETNANSKÝ, Dick, 903 01 Senec (SK)
(74) Representative: Bachratá, Magdaléna

(56) References cited:
- DE-A1- 1 455 463
- DE-U- 7 132 113
- US-A- 1 734 803
- US-A- 2 152 713
- US-A- 3 429 608

## Description

### FIELD OF THE INVENTION

The invention relates to a foldable superstructure for vehicles, in particular to a habitable superstructure, which substantially expands the usable space of the vehicle at a standstill and parking. In addition to the existing loading area of the vehicle, a reinforced original vehicle roof is used, which serves for mounting the floor of the superstructure, together with fitted auxiliary floors expanding the floor of the superstructure.

### BACKGROUND OF THE INVENTION

There are many known solutions for expanding the area of vehicles, usually for the purpose of their rebuilding into mobile homes, or various adjustments for taprooms or refreshment-stalls. There are several solutions, the best known ones being based on a permanent extension of the existing vans by a few tens of centimeters to the rear, see documents US 3,429, 608 A, DE 4 103 102 A and EP 1 510 399 B1, in some cases also expansion to the sides, see document US 20150102632 A1, and another popular expansion for sleeping is based on enlargement to the height - usually over the cabin of a driver and a front passenger. However, these adaptations have an extremely negative impact on distribution of gravity of the vehicle as recommended by the manufacturer, and subsequently the vans show markedly deteriorated drivability and impaired maneuverability.

More sophisticated, but much more costly adjustment, uses the so-called "frame chassis", wherein, typically, a new chassis is made (the vehicles used were practically always manufactured to order for a particular purpose, and they are missing in the market of the used cars), and on top of it a completely new superstructure of the van or habitable caravan is built, having considerably larger dimensions. In this case, however, the weight rarely corresponds to the category of passenger cars, i.e. vehicles up to 3,500 kg. This reconstruction has always an extremely negative impact on operating costs, especially while driving, as the surface of aerodynamic drag is apparently increased due to expanded width, height and length of the vehicle. The non-factory (often amateurish) distribution of weights relative to the axis of the vehicle, as well as the center of gravity, once again results in demonstrating the impaired driving performance, and safety of operation of such a "hybrid" product suffers as well.

Very popular and modern in recent years, especially in the US, are the so-called drawer adjustments of habitable or commercial space, where a part of the wall - with its own side walls, floor and roof - is pulled out on massive hinges from the original wall of the van to a distance of a few tens of centimeters, thus producing the expanded living space. The problem with these solutions (in addition to insufficient sealing), after cutting a large piece of wall, is particularly the need for reinforcement of the missing wall. Its absence leads to a significant disruption of the structural strength of the self-supporting vehicle body structure, and it requires welding steel reinforcements to compensate for the profiled strength of the original cut-out walls. This solution requires the use of various heavy steel sections, thus changing the loading capacity of the vehicle as allowed by the manufacturer, as well as the loading of individual axles, and therefore it is hardly ever used in the segment of light vans up to 3,500 kg - especially in Europe, where the weight is strictly controlled.

Heavier vans over 3,500 kg no longer fall under the category of passenger cars, but under the category of trucks, and thus they require a higher level of more expensive and demanding driving license. Moreover, they have limited driving times for one driver, they are not always allowed to ride at weekends, require using taximeters as well as expensive Go-Boxes charging for every kilometer of the highway instead of toll stickers, and have a number of other disadvantages. These vehicles over 3,500 kg are usually considerably bulkier, which impairs their easy handling and maneuverability, making it almost impossible to park them in the cities, and parking outside the reserved spaces is a big problem, too. The fuel consumption and overall operating costs is another very important factor.

The roof serving as the floor has already been used in various projects of adjustments of trucks, utility vans, and in construction of special vehicles based on factory-made frame chassis, but so far only tent-like manually mounted superstructures of tarpaulins, or fencing the roof by railing around the perimeter and using the roof as a lookout area without roofing are known.

The aim of the present invention is to eliminate most of these shortcomings of the known mobile homes.

### DISCLOSURE OF THE INVENTION

The invention is based on a foldable superstructure positioned on the roof of the original vehicle, usually a van, mobile home, truck, trailer, semitrailer, or a vessel. The foldable superstructure comprises a floor of the superstructure, fitted on both sides with downwardly foldable auxiliary floors, having drop sideboards movably fitted thereon. In folded configuration, the auxiliary floors and drop sideboards hang vertically along the sides of the vehicle, and when unfolded, the auxiliary floors are in horizontal position and form a continuation of the floor of the superstructure, thus enlarging the total useful floor area. The auxiliary floors are also movably connected with the drop sideboards and with the main sideboards. When unfolded, the drop sideboards are in vertical position and, together with the main sideboards, they make up the height of the superstructure. The height of the main sideboards is longer by the height of the storage space of the superstructure contained between the floor and the roof of the superstructure in its unfolded configuration, as the width of the auxiliary floors together with the height of the drop sideboards. When folded, the storage space of the superstructure is used for accommodating permanent and temporary equipment of the superstructure, or for luggage.

With their other side, the main sideboards are movably connected with the roof of the superstructure. The front and rear face of the unfolded superstructure is made up by front panels, rear panels, and front and rear triangular panels. The front panels and the rear panels are rectangular and foldable to the inside, and are connected with the front lower and upper panelling of the front face, and with the rear lower and upper panelling of the rear face. In unfolded configuration, the superstructure has front and rear triangular panels mounted on its front and rear part on the sides of the front panels and rear panels. In the front and rear part of the superstructure, the triangular panels can be mounted removably, by mechanical sliding of their "Z"-shaped lower edge beyond and to the edges of the auxiliary floors, or foldably inward the superstructure, connected with the auxiliary floors and ensured by fast clamping pawls, arbitrarily positioned on the sides of triangular panels.

The individual parts of the superstructure must be provided with an appropriate movable joint, such as sealed continuous hinges or a multi-hinge system with separate sealing.

A proportional lifting of the superstructure by an exact pantographic movement when unfolding is ensured by movably connected main sideboards with drop sideboards and auxiliary floors, by means of rotary lifting of rear and front panels.

Unfolding and folding of the superstructure can be carried out in various ways, e.g., by rotating a threaded rod in a telescopic tube, by a crank mechanism, a pulley system with wires, a chain system, or by mechanical lifting. It can be driven by an electric motor, sliding servo-motor, a hydraulic lifting system, or a lifting mechanism using the compressed air.

When unfolding and folding the superstructure by rotating the threaded rod in the telescopic tube, the roof of the superstructure is firmly fixed to the telescopic tube, which has a nut firmly fixed at its bottom, in which the threaded rod moves, being rotatably mounted in the floor of the vehicle and fitted in a protective tube, which also serves as a handle for ascending to the superstructure. By turning the threaded rod, the entire superstructure is being raised or lowered, and thus unfolding or folding. Due to space-ergonomic reasons, the entire retractable mechanism, consisting of the telescopic tube and the threaded rod fitted in the protective tube, is positioned eccentrically out of the center line of the vehicle. Nevertheless, a proportional lifting of the superstructure is ensured by a pantographic movement of the whole system of the superstructure.

To ensure the vehicle at a standstill with unfolded superstructure, front and rear supporting legs can be fixed on its sides for better stability and bracing, which are turned upwards during transport, thus ensuring the lateral auxiliary floors with hanging drop sideboards and main sideboards against any movement or vibration.

A part of the side wall in the kitchen area of the vehicle can be uptilted, which increases the working surface while creating an opening to vent the vapors.

It is preferable, and even explicitly necessary for maintaining the status of the passenger car category, that the whole superstructure was made of light and strong composite materials, such as foamed aluminum and carbon composites, considering the load of the original vehicle.

A connection of the superstructure with the original space of the vehicle is ensured by an adequately large opening in the roof of the vehicle and a light metal or composite construction of stairs or a ladder attached to the opening.

Before driving, front and rear triangular panels are manually removed or retracted inward the superstructure, and the superstructure is folded using the retractable mechanism, almost to the level of the original roof of the vehicle, wherein the main sideboards, drop sideboards and auxiliary floors are hanging vertically along the sides of the vehicle, with the two faces folded inside the superstructure as well. In this configuration, the vehicle is close to its original dimensions.

With this technical solution, the usable space of the vehicle is fundamentally increased, while retaining the main advantages of the vehicle, namely the minimal aerodynamic drag (almost identical to the original drag), the unchanged handling properties (weight distribution is not altered by extending or expanding the vehicle), the maneuverability, parking possibilities (the original dimensions remain virtually unchanged), and mainly the low gross vehicle weight and the associated minimum operating costs.

Another advantage of the proposed solution consists in the fact, that not only a new vehicle, but also the used one can be adjusted, thus significantly saving the procurement costs.

### BRIEF DESCRIPTION OF THE DRAWINGS

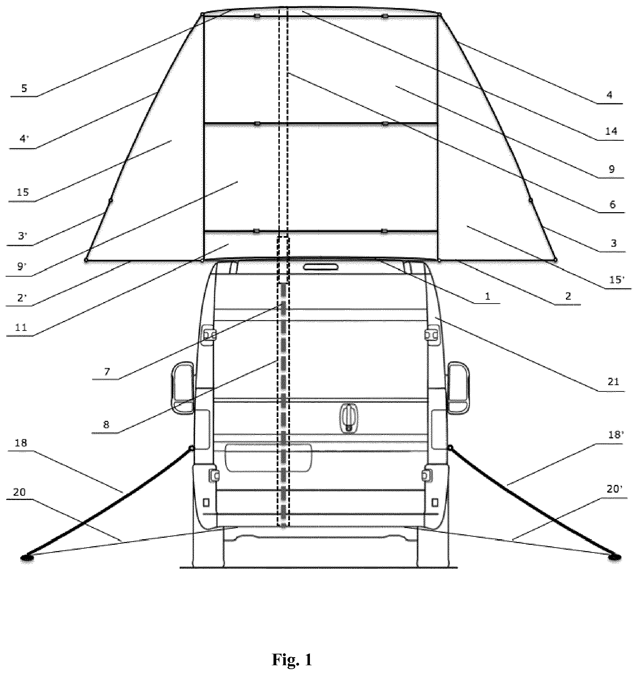

Fig. 1 shows a rear view of the vehicle, which is a van with unfolded superstructure, strutted with supporting legs.

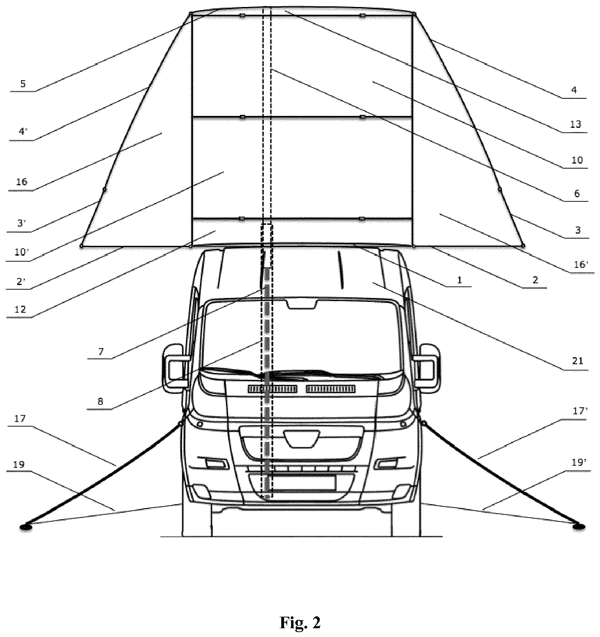

Fig. 2 shows a front view of the vehicle, which is a van with unfolded superstructure, strutted with supporting legs.
Fig. 3 shows a rear view of the vehicle, which is a van with superstructure during its folding.
Fig. 4 shows a side view of the vehicle, which is a van with superstructure during its folding.

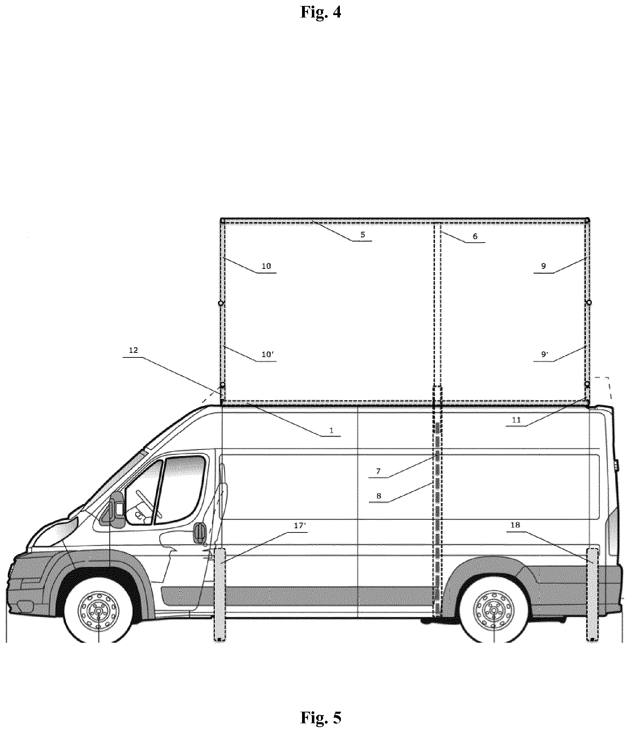

Fig. 5 shows a side view of the vehicle, which is a van with unfolded superstructure.
Fig. 6 shows a side view of the vehicle, which is a van with folded superstructure.
Fig. 7 shows a rear view of the vehicle, which is a van with folded superstructure.
Fig. 8 shows a rear view of the vehicle, which is a van with unfolded superstructure, with a part of the sideboard uptilted, and strutted with supporting legs.

### DETAILED DESCRIPTION OF THE PREFERRED EMBODIMENTS

The vehicle 21, in this case the original van, is on top of its roof fitted with the first floor 1. On its sides, the floor 1 extending the width of the original roof of the van is horizontally provided with watertight continuous hinges, having auxiliary floors 2, 2' fitted thereon. In folded configuration, both these auxiliary floors hang vertically along the sides of the van, and when the superstructure is unfolded, they are in a horizontal position and form a continuation of the floor 1. On their sides, these auxiliary floors 2, 2' are also provided with watertight continuous hinges, on which drop sideboards 3, 3' are fitted, hanging along the side of the van in folded configuration of the superstructure, thus forming a vertical continuation of the auxiliary floors 2, 2', and when the superstructure is unfolded, they are uptilted to form the bottom of the sideboards of the superstructure.

The drop sideboards 3, 3' are also provided with watertight continuous hinges, by which they are connected with the main sides 4, 4', overlapping the auxiliary floors 2, 2' and drop sideboards 3, 3' along the sides of the van in folded configuration. When the superstructure is unfolded, they form the side walls of the superstructure, together with drop sideboards 3, 3'. Both main sideboards 4, 4' are connected with a slightly convex-curved roof 5 by means of watertight continuous hinges. The height of the main sideboards 4, 4' is about 25 cm longer than the sum of the widths of auxiliary floors 2, 2'and the height of drop sideboards 3, 3'. The space between the roof 5 and the floor 1 serves as a storage space for permanent equipment of the superstructure, storing of various furniture accessories, or for luggage.

When the superstructure is unfolding, the roof 5 is raised by means of a vertical pressure of the telescopic tube 6, which is firmly fixed therewith, and in its lower part a nut (not shown) is firmly fixed, in which the threaded rod 7 rotates, fitted in the protective tube 8 and rotatably fixed in the axial bearing of the vehicle floor. The threaded rod 7 is rotated by an electric motor via toothed belt gearing (not shown). Due to space reasons, the entire retractable mechanism is positioned eccentrically out of the center line of the vehicle. When unfolding, the superstructure is raised proportionally due to an exact pantographic movement of both main sideboards 4, 4', drop sideboards 3, 3' and auxiliary floors 2 and 2', as well as a rotated pantographic lifting of rear panels 9, 9' and front panels 10, 10'.

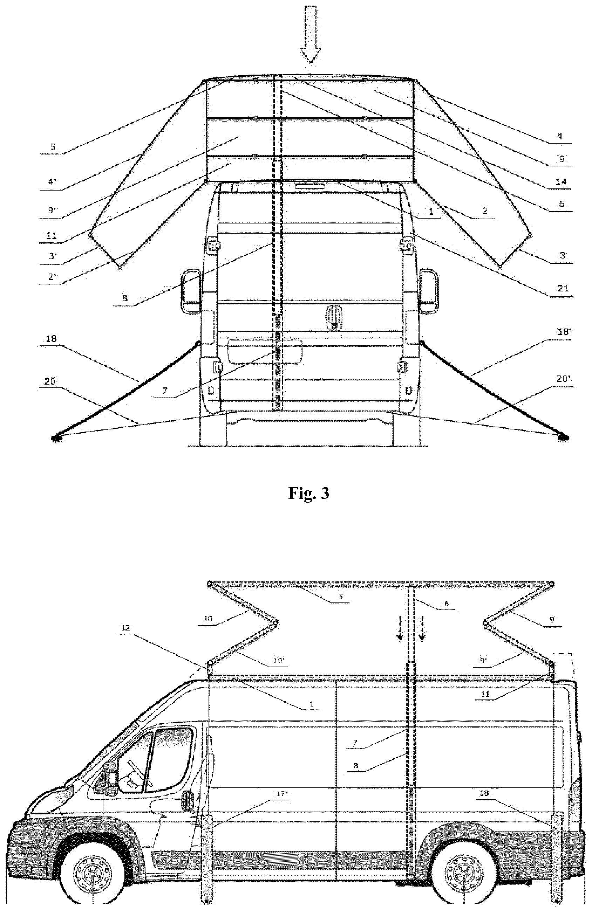

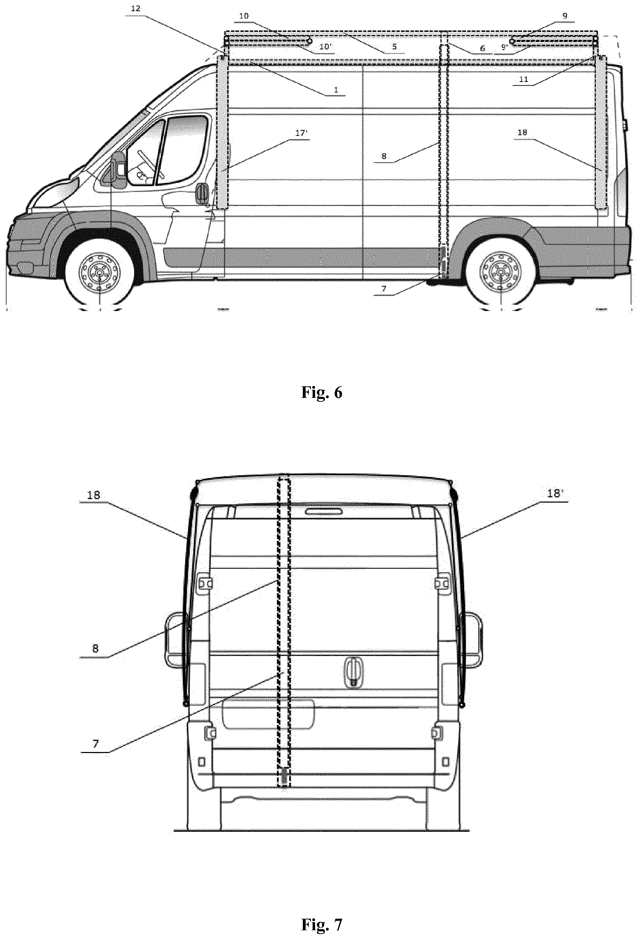

The front and the rear face consists of two identical rectangular rear panels 9, 9' and front panels 10, 10', connected in the middle with watertight continuous hinges. The rear panel and the front panel 10 are attached with their upper parts by means of watertight continuous hinges to the front upper panelling 13 and the rear upper panelling 14, wherein the rear panel 9' and the front panel 10' are attached with their lower parts by means of watertight continuous hinges to the front lower panelling 12 and the rear lower panelling 11. In unfolded configuration, rear panels 9, 9' and front panels 10, 10' built on each other form the front and the rear face of the superstructure. In folded configuration, rear panels 9, 9' and front panels 10, 10' are folded over the watertight continuous hinges towards the interior of the superstructure, as shown in FIG. 4 and FIG. 6.

The rear triangular panels 15, 15' and the front triangular panels 16, 16' are connected, foldably inward the superstructure, with auxiliary floors 2, 2'. When the superstructure is folded, they are turned inward the superstructure, and in unfolded configuration they are raised and ensure the main sideboards 4, 4' by fast clamping pawls placed on the sides of the triangular panels.

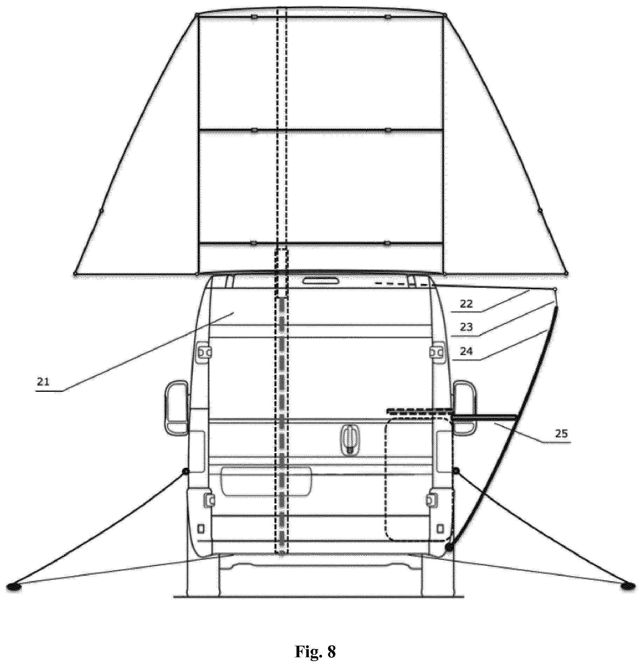

The side wall in the kitchen area of the vehicle 21 (van) comprises a tiltable wall 24 with slidable counter 25, foldable by means of the telescopic bar 22, together with the holder of the telescopic rod 23 (FIG. 8).

In front and rear part of the vehicle sides, the front supporting legs 17, 17' and the rear supporting legs 18, 18', having the width of 75 mm, are mounted by means of fixed hinges in side depressions. In folded configuration, the front supporting legs 17, 17' and the rear supporting legs 18, 18' are turned upwards and longitudinally they overlap the main sideboards 4, 4' by the area of 15 mm, thus ensuring the side auxiliary floors 2, 2' with hanging drop sideboards 3, 3' and the main sideboards 4, 4' against any movement or vibration.

When the superstructure is unfolded, the front supporting legs 17, 17' and the rear supporting legs 18, 18' are turned down to the ground to release the auxiliary floors 2, 2' with hanging drop sideboards 3, 3' and the main sideboards 4, 4', and then the van is fixed by tensioning the appropriate steel front wires 19, 19' and rear wires 20, 20'.

### INDUSTRIAL APPLICABILITY

The present invention has significant potential uses, especially in caravanning as an extra sleeping area, or for small refreshment-stall keepers (the so-called "stallholders"), who can run their restaurant or taproom businesses in the lower part of the vehicle, and use the upper part - the upper floor - for private purposes, for example for sleeping. The use of auxiliary floors is preferable, providing the caravan with large awnings against sun or rain. It is also possible to use the entire area as a mobile two-storey café with tables up, down, and under the awning on both sides of the van. The invention is also suitable as an emergency mobile studio for various media, such as TV, radio and magazine editors. It is also applicable in transit, where a driver transporting goods over longer distances can use the upper floor for a comfortable rest during compulsory breaks.

### LIST OF REFERENCE SIGNS:

- 1: - floor
- 2, 2': - auxiliary floors
- 3, 3': - drop sideboards
- 4, 4': - main sideboards
- 5: - roof
- 6: - telescopic tube
- 7: - threaded rod
- 8: - protective tube
- 9, 9': - rear panels
- 10, 10': - front panels
- 11: - rear lower panelling
- 12: - front lower panelling
- 13: - front upper panelling
- 14: - rear upper panelling
- 15, 15': - rear triangular panels
- 16, 16': - front triangular panels
- 17, 17': - front supporting legs
- 18, 18': - rear support legs
- 19, 19': - front tensioning wires
- 20, 20': - rear tension wires
- 21: - vehicle
- 22: - telescopic rod
- 23: - holder of telescopic rod
- 24: - tiltable wall
- 25: - slidable counter

## Claims

1. Foldable superstructure for vehicles, which comprises a floor (1), fitted on both sides with downwardly foldable auxiliary floors (2, 2'), having drop sideboards (3, 3') movably fitted thereon, which are movably connected with main sideboards (4, 4'), wherein their height is longer by the height of the storage space of the superstructure in its unfolded configuration, as the width of the auxiliary floors (2, 2') together with the height of the drop sideboards, the main sideboards (4, 4') are movably connected with a roof (5) with their other side, wherein a front panel (10') is foldable to the inside and connected with a front lower panelling (12) and the front panel (10) is foldable to the inside and connected with a front upper panelling (13), a rear panel (9') is foldable to the inside and connected with a rear lower panelling (11), and the rear panel (9) is foldable to the inside and connected with a rear upper panelling (14), front triangular panels (16, 16') and rear triangular panels (15, 15') for closing the folded superstructure are removable or mounted, foldably inward the superstructure, to the auxiliary floors (2, 2') and equipped with fast clamping pawls positioned on their sides.

2. The foldable superstructure according to claim 1, **characterized in that** the roof (5) is firmly connected with a telescopic tube (6) designed for unfolding and folding the superstructure, having a firmly fixed nut at its bottom, in which a threaded rod (7) moves, being rotatably mounted in the floor of the vehicle and fitted in a protective tube (8).

3. The foldable superstructure according to claim 1 or 2, **characterized in that** front supporting legs (17, 17') and rear supporting legs (18, 18') are hingedly attached on the vehicle (21) sides.

4. The foldable superstructure according to any of claims 1 to 3, **characterized in that** the individual parts are from lightweight and strong composite materials.

5. The foldable superstructure according to any of claims 1 to 4, **characterized in that** a part of the side wall of the vehicle (21) in the kitchen area is formed by a tiltable wall (24).

## Patentansprüche

1. Klappbarer Aufbau für ein Transportmittel, **dadurch gekennzeichnet, dass** er einen Boden (1) aufweist, auf dem auf beiden Seiten die nach unten klappbaren Hilfsboden (2, 2') aufgesetzt sind, auf denen kippbare Seitenwände (3, 3') beweglich angebracht sind, die mit den Hauptseitenwänden (4, 4') beweglich verbunden sind, wobei ihre Höhe um die Höhe des Laderaums des Aufbaus in seinem nicht zusammengeklappten Zustand länger ist als die Breite der Hilfsboden (2, 2') zusammen mit der Höhe der klappbaren Seitenwänden, die Hauptseitenwänden (4, 4') mit ihrer anderen Seite mit einem Dach (5) beweglich verbunden sind, wobei das Frontpaneel (10') nach innen klappbar mit einer vorderen unteren Verkleidung (12) verbunden ist und das Frontpaneel (10) nach innen klappbar mit einer vorderen oberen Verkleidung (13) verbunden ist, das Rückpaneel (9') nach innen klappbar mit einer hinteren unteren Verkleidung (11) verbunden ist, und das Rückpaneel (9) nach innen klappbar mit einer hinteren oberen Verkleidung (14) verbunden ist, wobei die vorderen dreieckigen Paneele (16, 16') und die hinteren dreieckigen Paneele (15, 15') zwecks Verschließens des geklappten Aufbaus lösbar sind oder kippbar in den Aufbau hinein auf den Hilfsboden (2, 2') befestigt sind und mit an ihren Seiten angeordneten Schnellspannrasten ausgestattet sind.

2. Klappbarer Aufbau nach Anspruch 1, **dadurch gekennzeichnet, dass** das Dach (5) fest mit einem zum Aufklappen und Zusammenklappen des Aufbaus ausgelegten Teleskoprohr (6) verbunden ist, das an seiner Unterseite eine festfixierte Mutter aufweist, in der sich eine drehbar im Transportmittelboden montierte und in einem Schutzrohr (8) gelagerte Gewindestange (7) bewegt.

3. Klappbarer Aufbau nach Anspruch 1 oder 2, **dadurch gekennzeichnet, dass** die vorderen Stützbeine (17, 17') und die hinteren Stützbeine (18, 18') an den Seiten des Transportmittels (21) gelenkig befestigt sind.

4. Faltbarer Aufbau nach einem der Ansprüche 1 bis 3, **dadurch gekennzeichnet, dass** seine Einzelteile aus leichten und festen Verbundmaterialien bestehen.

5. Klappbarer Aufbau nach einem der Ansprüche 1 bis 4, **dadurch gekennzeichnet, dass** ein Teil der Seitenwand des Transportmittels (21) im Küchenbereich durch eine kippbare Wand (24) gebildet ist.

## Revendications

1. Superstructure assemblable pour moyens de transport **caractérisée en ce que** qu'elle contient une surface (1) sur les deux côtés de laquelle, de manière inclinée vers le bas, nous trouvons d'autres surfaces auxiliaires (2, 2'), où sont installés des flancs mobiles basculants (3, 3') liés aux flancs principaux de façon mobile (4, 4'), avec une hauteur qui dépasse (de la hauteur de l'espace de stockage de la superstructure assemblée) la largeur des surfaces auxiliaires (2, 2') avec la hauteur des flancs basculants, les flanc principaux (4, 4') sont de l'autre côté connectés au toit (5), le panneau antérieur (10') est intérieurement lié au remplissage inférieure avant (12) et le panneau antérieur (10) est intérieurement lié au remplissage supérieure avant (13), le panneau postérieur (9') est intérieurement lié au remplissage inférieure derrière (11) et le panneau postérieur (9) est intérieurement lié au remplissage supérieure derrière (14), et les panneaux triangulaires avant (16, 16') et les panneaux triangulaires derrière (15, 15'), pour la fermeture de la superstructure désassemblée, sont intérieurement attachés aux surfaces auxiliaires (2, 2') - de manière rabattable ou avec démontage - et ensuite munis de cliquets à fixation rapide sur les côtés.

2. Superstructure assemblable selon la demande 1, **caractérisée en ce que** le toit (5) est bien connecté au tuyau débrayable (6), qui sert pour assembler et désassembler la superstructure, avec dans la partie inférieure un écrou bien serré, où nous retrouvons une barre filetée (7) fixée de manière pivotante à la surface du moyen de transport et insérée dans un tuyau de protection (8).

3. Superstructure assemblable selon la demande 1 ou 2, **caractérisée en ce que** sur les côtés du moyen de transport (21) il y a des broches d'appui antérieures fixées de manière rabattable (17, 17') et des broches d'appui postérieures (18, 18').

4. Superstructure assemblable selon une des demandes de 1 à 3, **caractérisée en ce que** ses composants individuels sont en matériaux composites légers et lourds.

5. Superstructure assemblable selon une des demandes de 1 à 4, **caractérisée en ce qu'**une partie de la paroi latérale du moyen de transport (21) dans la zone cuisine est formée par une paroi surbaissée (24).
